# EUROPEAN PATENT APPLICATION

(11) **EP 3 477 636 A1**
(43) Date of publication of application: **01.05.2019**
(21) Application number: 18203177.3
(22) Date of filing: 29.10.2018
(51) Int. Cl.: G10L 15/26, G10L 25/48, H04M 3/42, G06F 17/27, H04M 3/22, G10L 25/78, G10L 25/87, G10L 15/18

(54) **ANALYSIS MECHANISMS OF TELEPHONE CONVERSATIONS FOR CONTEXTUAL INFORMATION ELEMENT EXTRACTION**

(30) Priority: 30.10.2017 DE 102017219462
(71) Applicant: Seth, Sagar, 81673 München (DE)
(72) Inventor: SETH, Sagar, 81673 München (DE); SIKKA, Resham, 81673 München (DE)
(74) Representative: Grünecker Patent- und Rechtsanwälte PartG mbB

(57) **Abstract**

The present invention relates to a method and a communication terminal for analyzing telephone conversations. The analysis includes recording a telephone conversation; segmenting the telephone conversion recording into a sequence of voiced audio segments, each voiced audio segment having a time-code derived from the telephone conversation recording; converting each of the sequence of voiced audio segments into a respective text segment associated with the time-code; and extracting from the sequence of converted text segments contextual information elements considering the complete sequence of converted text segments; wherein the contextual information elements are ranked depending on the time-code of the text segment in the sequence of text segments from which it is extracted.

## Description

The present invention relates to the processing of telephone conversations, in particular for the extraction of contextual information elements, for instance regarding appointments, in a communication terminal such as a mobile handset, preferably one of a mobile telephone, a mobile tablet a smart watch or other mobile devices with wireless connectivity, which is connected via a communication network to a remote server.

In the more recent past, numerous attempts are being made to develop and market voice controlled personal assistants, e.g. in form of programs or services operating on the mobile handset. Even though the functionality of these voice controlled personal assistants has matured over time, the user appeal and the usage frequency still suffers for psychosocial reasons.

Particularly, it has been discovered that users (still) find it "artificial" and "un-natural" to engage in a spoken conversation with a voice controlled personal assistant on a mobile handset. It has become so common for users to interact via tactile inputs (e.g. touch screens) with the mobile handset such that voice inputs are still less appealing to users out of customary practice.

Despite this, it is widely recognized that there exists one use case where it feels "intuitive" and "natural" for users to use the voice input with a mobile handset, namely in telephone conversations with different users. This use case however is perceived differently, since there the mobile handset is only valued as a tool, rather than as an equal communication partner.

Although in this use case, the mobile handset is provided with voice inputs, these inputs are commonly not processed in the mobile handset, particularly not for information extraction purposes. The absence of such processing of the information exchanged during telephone conversations can be understood with prejudices which have built up in the past.

In the past, there may have been aversions to making telephone conversation available for processing. Strong resentments may stem from the fear of wire-tapping the telephone conversation. This however has changed most recently, namely since users now distinguish more clearly between manual processing through an (human) operator, and an automated processing through a program or service.

In the context of the present invention, it is thus recognized that, also for the use case of a telephone conversation, there is a newly emerging demand for automated processing by a program or service. This is even more so since it is quite common to schedule, for example, appointments during a telephone conversations.

By making telephone conversations accessible to an automated processing in the mobile handset, it can be readily appreciated that, for example, a verbally scheduled lunch appointment can be automatically entered into an electronic calendar on the mobile handset. This results in benefits to the user.

Nevertheless, privacy concerns (and/or privacy rights) have also to be considered and/or respected to arrive at an appealing mechanism for further processing telephone conversations in a mobile handset.

To overcome the drawbacks of systems of the past, the present invention suggests a communication terminal such as a mobile handset which separately or in conjunction with a connected remote server is capable of performing (automated) processing of telephone conversations for extraction of contextual information elements (e.g. regarding appointments).

For this purpose, according to a first aspect, a method is suggested for analyzing telephone conversations to be performed in a communication terminal and/or a remote server connected to the communication terminal, comprising the steps of: recording a telephone conversation; segmenting the recorded telephone conversation into a sequence of voiced audio segments, each voiced audio segment having a time-code derived from the recorded telephone conversation; converting each of the sequence of voiced audio segments into a respective text segment associated with the time-code; and extracting from the sequence of converted text segments contextual information elements considering the complete sequence of converted text segments; wherein the contextual information elements are ranked depending on the time-code of the text segment in the sequence of text segments from which it is extracted.

Further aspects relate to a communication terminal, and/or a communication system with the communication terminal and a remote server performing the method as stated above.

In all these exemplary embodiments, the telephone conversation is generally understood as a lengthy, redundant and/or repetitive exchange of spoken words between two or more users, for instance, between users of communication terminals. For these reasons, this inherent character of telephone conversation does not compare and does not correlate with voice inputs, for example, voice inputs to a voice controlled personal assistant.

Particular, the processing of telephone conversation requires specific adaptation, of say its recoding, before it can be subjected to the processing by a speech-to-text library. Due to the mere length of a telephone conversation, a vast amount of processing resources or communication resources would be required, should the recording be processed with a speech-to-text library in the communication terminal or should the recording be transmitted to a remote server which performs the processing with a speech-to-text library.

Also even if it was possible to convert the telephone conversation into text, then due to redundancies and/or repetitions in the exchange of spoken words, it requires a specific processing for an (automatic) analysis in the communication terminal. Particularly, the focus is not to extract any contextual information elements, but instead to retrieve those elements which have redundancies and/or repetitions removed there-between. In other words, also here the processing of telephone conversations requires specific adaptations.

In this respect, the underlying concept includes segmenting the recording of a telephone conversation into voiced audio segments, each with a time-code, which are then separately converted into text segments, each with a corresponding time-code. With the time-code, the order or sequence of the individual text segments can be recovered.

Another underlying concept includes extracting from converted text segments contextual information elements, where redundancies and repetitions can be detected and/or removed from the text segments based on a ranking depending on the underlying time-code. In other words, a ranking based on time-codes of the text segments enables the contextual information element extracted therefrom to be ranked in an order of relevancy.

In summary, the same time-code does not only identify the sequence of voiced audio segments, or corresponding text segments, but also enables a ranking of contextual information elements contained therein. Thus, the present invention facilitates performing (automated) processing of telephone conversation for extraction of contextual information elements.

Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:
- **Fig. 1**: shows a schematic view of a first embodiment of the telephone conversation analysis mechanism for contextual information element extraction;
- **Fig. 2**: illustrates a more detailed view of a second embodiment of the telephone conversation analysis mechanism for contextual information element extraction;
- **Fig. 3**: depicts a deployment scenario of the exemplary telephone conversation analysis mechanism for contextual information element extraction of the first embodiment; and
- **Fig. 4**: shows a schematic operation of the exemplary telephone conversation analysis mechanism for contextual information element extraction according to the first embodiment.

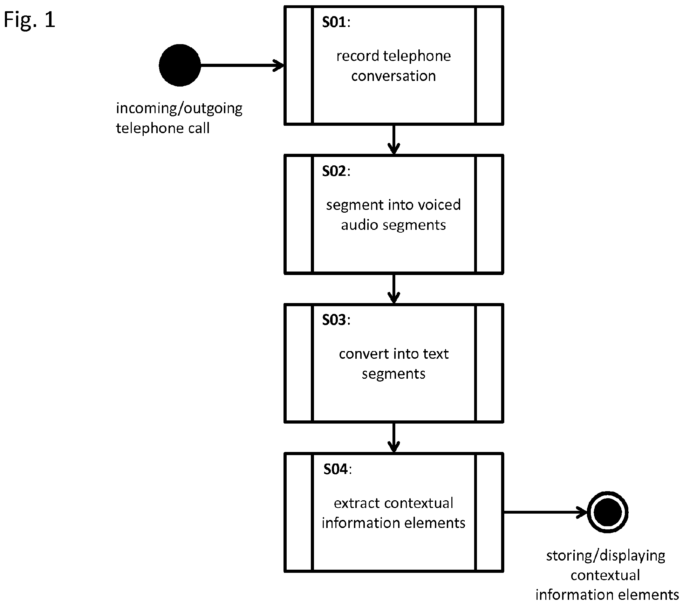

Referring to Fig. 1, a schematic view of a first embodiment of the telephone conversation analysis mechanism for contextual information element extraction is shown. This mechanism is to be performed by a communication terminal, and/or a remote server connected to the communication terminal over a communication network.

Even though it is generally desired to have a communication terminal such as a mobile handset, preferably a mobile telephone, perform at least some operations of the analysis mechanism, this shall not be understood as a restriction of the present disclosure. Rather, there may also be cases where at least other operations of the analysis mechanism are performed by a remote server which is connected to the communication terminal.

The deployment of the individual operation to the communication terminal and/or the remote server may be based on a valuation of restrictions regarding processing capabilities in the communication terminal. Should, for example, the communication terminal feature a processor with limited amounts of processing capabilities, then it could be advantageous to at least deploy some of the operation to the connected remote server.

The advantages of such a deployment, however, have to be balanced with the excess amount of communication between the communication terminal and remote server. As the communication capabilities may also be restricted for the communication terminal, a tradeoff has to be found between the usage of processing resources and communication resources.

Nevertheless, also other considerations can have an impact on the deployment. Should the focus lie on privacy concerns (or privacy rights), for instance, then it may be advantageous to have the communication terminal perform all operations of the telephone conversation analysis mechanism. Thereby, it can be ensured that no potentially private details are shared within the communication network.

The telephone conversation analysis mechanism is started together with an incoming/outgoing telephone call to/from the communication terminal. Particularly, as the analysis is to be performed on the basis of the telephone conversation it is important for the mechanism to be set off synchronously with the telephone call. Thus, the communication terminal has to be configured such that incoming/outgoing telephone calls not only establish a voice connection, but also trigger the analysis mechanism.

In exemplary implementations, a user configuration may provide that the telephone conversation analysis mechanism is automatically started together with every incoming/outgoing telephone call to/from the communication terminal. Alternatively, a user configuration may provide that the analysis mechanism is started only when a manual input (e.g. via one of the communication terminal's inputs) is invoked before (e.g. the user may start and run in the background a corresponding application) or together (e.g. the user may press a dedicated hardware or software button on the communication terminal) with the incoming/outgoing telephone call to/from the communication terminal.

Advantageously, a user configuration may also foresee that the telephone conversation analysis mechanism is only started automatically together with incoming/outgoing telephone calls which are from/to a telephone number from a pre-determined list of telephone numbers (e.g. a user may manually add telephone numbers or may link contacts from an address book to form the pre-determined list of telephone numbers). In all other cases, the user configuration will provide that the analysis mechanism is started only when a manual input is invoked.

The latter user configuration may be particularly advantageous in order to consider and/or respect privacy concerns (and/or privacy rights) of other conversation partners. For example, a user may only manually add telephone numbers to the pre-defined list which are from conversation partners with which he/she has expressly agreed to use the telephone conversation analysis mechanism. Thus, there is no risk in leaving the privacy concerns (and/or privacy rights) unconsidered and/or disrespected.

Once the analysis mechanism is started, the telephone conversation which is conducted over an established voice connection is recorded (see S01). For recording purpose, an audio file is created and audio samples from the telephone conversation are sequentially stored therein. In the present disclosure, there is no restriction that a single audio file is used per telephone conversation.

Rather, it may be advantageous to add a certain amount of parallelism for the subsequent operations. For this purpose, it would be necessary to split the telephone conversation into multiple audio files of a given length, say one or two minutes each. After having reached the one or two minute threshold, a next audio file may be created and the storing of audio samples from the telephone conversation may start anew.

In an exemplary implementation, the recording operation may only involve recording of the uplink channel of the telephone conversion (and not the downlink channel of the telephone conversation). This advantageously respects privacy concerns (or observes privacy rights) of the other party to the telephone conversation which is included in the downlink channel of the telephone conversation. Further, this reduces the data amount to be processed in the subsequent operations, and also enables a better separation between the speakers.

Upon completion of the recording of one of the at least one audio file(s), the operation proceeds with segmenting (see S02) of the audio file into a sequence of voiced audio segments. As readily understood a telephone conversation may comprise voiced (one user speaks) and un-voiced (both users are silent) parts, where notably only the voiced parts carry information.

Particularly, in a telephone conversation a fair amount of un-voiced parts are separating voiced parts, for example, between a question and a response is usually a pause for thought. Notably, these pauses help ensuring that voiced audio segments always relate to a single speaker. There will be plural voiced audio segments of each speaker though. Otherwise it could not be called a conversation but a monologue.

In an exemplary implementation, the removal of un-voiced audio segments from the telephone conversation recording may be effected depending on a pre- determined noise threshold level. It goes without saying that this noise threshold level can be individually pre-determined, e.g. for each telephone conversation recording separately, or can be globally pre-determined such that it works well under conditions common to various telephone conversations.

Should, for example, a noise threshold level be determined for the telephone conversation, then this threshold level can be equally used to identify all parts of the un-voiced audio segments. Alternatively, the threshold level can also separately be determined for loud and silent parts of the telephone conversation, since the voiced audio segments as well as the un-voiced segments will equally mimic the same behavior.

Together with the segmenting into voiced audio segments, each segment is added a time-code which is derived from the telephone conversation recording. For example, each voiced audio segment can have as time-code an absolute time or relative time of the segment in the total recording of the telephone conversation.

Say should the recording have started at 9:00 AM and zero seconds and should the segment start from the third minute and thirty seconds, then an absolute time-code would be (hour: 9, minutes: 3, seconds 30) and alternatively an relative time-code would be (hour:0, minute 3, seconds 30) with regard to the start of the recording. With the time-code the voiced audio segments can be kept in order or sequence.

Subsequently, each of the sequence of voiced audio segments is converted (see S03) into a respective text segment. For this purpose, a conventional speech-to-text library may be used. Thereby, the information in each voiced audio segment is converted into text without unnecessarily relying on the speech from noise separation capabilities of the library.

It has been recognized that the conversion results are much better for less advanced speech-to-text libraries when separate voiced audio segments are processed by the library. Particularly, with the limited processing capability of a communication terminal in mid, the use of such less advanced libraries would however be required and could still result in reasonable outputs.

In an exemplary implementation the speech-to-text library may be provided, preferably when operated on the remote server, with a pre- determined noise threshold level. This is particular advantageous, if the threshold level is determined differently for loud and silent parts of the telephone conversation. Then, it can be ensured that in silent parts, a lower threshold level still allows for a decent quality conversion of voiced audio segments into text segments of the telephone conversation and vice-versa.

Again, each of the converted text segments is associated with the same time-code of the corresponding voiced audio segment. Thereby, the text segments can be kept in order or sequence, additionally making it possible to even display the whole telephone conversation in text format. For example, with this time-code it could be possible to display the whole telephone conversation with each text segment being presented in order or sequence as speech bubbles.

Then, the operation proceed with extracting (see S04) from the sequence of text segments contextual information elements related to, for example, appointments. The term contextual information element shall be understood, in the context of the present disclosure, as referring to an element which has computer recognizable contextual information. This may be achieved by conventional contextual information retrieval algorithms or by use of an artificial intelligence algorithm with a suitable training set.

For example, for extracting contextual information elements relating to appointments, it is necessary to extract, among others: appointment-title, appointment-time, appointment-duration, appointment-location, and appointment-participants. Each of these items defines a different category of contextual information elements, as becomes apparent from the following.

In another example, for extracting contextual information elements relating to (calendar) reminders, it is necessary to extract, among others: reminder-title, reminder-time, reminder-items. Also here, each of these items defines different categories of contextual information elements.

In yet another example, for extracting contextual information elements relating to shopping lists, it is necessary to extract, among others: shopping-title, shopping-time, shopping-items. Also here, each of these items defines different categories of contextual information elements.

For the category appointment-time, one contextual information element can be "12:00 AM" and another can be "13:30 AM". Even though both elements are different, they will be extracted as contextual information elements of a same category.

The extraction of contextual information elements may be assisted when accessing the telephone book stored on the communication terminal for extracting elements of the class appointment-participants, when accessing the calendar stored on the communication terminal for extracting the class appointment-time and appointment-duration, and may be assisted when accessing maps data for extracting the appointment-location.

Putting it all together, the redundancy and repetitions inherent to the telephone conversation have to be compensated for. Unlike with instructions to voice controlled personal assistant, it is quite normal to telephone conversations that there is no immediate agreement reached on, say an appointment for having lunch together.

For this purpose, the extracting operation proceeds with ranking each of the contextual information elements depending on the time-code of each text segment in the sequence of converted text segments from which it is extracted. The term ranking shall be understood, in the context of the present disclosure, as referring to an importance or relevancy for the telephone conversation.

Irrespective of the amount of parallelism added by splitting the telephone conversation in multiple audio files of a given length and segmenting (see S02) and converting (see S03) them separately, the extraction (see S04) is always performed on the complete sequence of converted text segments. Only thereby the redundancy and repetitions inherent to the telephone conversation can be compensated for during the extraction of contextual information elements.

For example, in a telephone conversation an extracted contextual information element is ranked higher the closer it is to the end of the telephone conversation (i.e. in line with the general principle "the last word counts"). Thereby, it can be assured that a common agreement has been reached on, say the appointment-time when scheduling the lunch appointment during the telephone conversation.

In an exemplary implementation, the ranking operation is carried out so that plural contextual information elements of a same category are ranked differently. With this, different contextual information elements, pertaining to the same category, always receive a different rank, thereby making it easy to refer to the most important or relevant element of a category in the telephone conversation.

In another exemplary implementation, the general principle "the last word counts" is realized as follows: the ranking operation is carried out so that plural contextual information elements of a same category are ranked in an ascending order with the time-code of the respective text segments. With this, an increasing rank or an ascending order is imposed on contextual information elements the closer it is to the end of the telephone conversation.

Now, with the objective in mind of enabling an (automatic) analysis, extracted contextual information elements can be grouped depending on their rank into sets, such that each set comprises only highest ranked contextual information elements pertaining to different categories. Such an approach, however, assumes that there are more than one category of contextual information elements extracted which is not necessarily the case in the present disclosure.

Assuming for the sake of argument, that contextual information elements of different categories are (actually) extracted from within a telephone conversation, then this grouping of only highest ranked elements of different categories in a set ensures that even though the individual elements have been extracted from different text segments, they all pertain to different classes on which an agreement has been reached.

The telephone conversation does not necessarily involve only scheduling a single appointment, i.e. the grouping into a single set. For this purpose, there can formed multiple sets, each grouping one contextual information element of one category with preceding and highest ranked elements of different categories. In any case, to tell different sets of grouped contextual information elements apart, each set is associated with the time-code of the text segment from which the last contextual information element of the set is extracted.

In an even further exemplary implementation, the extracted contextual information elements, preferably grouped in each set, are displayed on a display of the communication terminal, and/or the extracted contextual information elements, preferably grouped in each set, are stored in a non-volatile memory of the communication terminal.

It is worth mentioning that the one or plural files with the telephone conversation recording may also be stored in the non-volatile memory of the communication terminal, e.g. for future playback, and/or repeated analysis. With this, it is also possible to combine the analysis results (i.e. contextual information elements) from multiple telephone conversations.

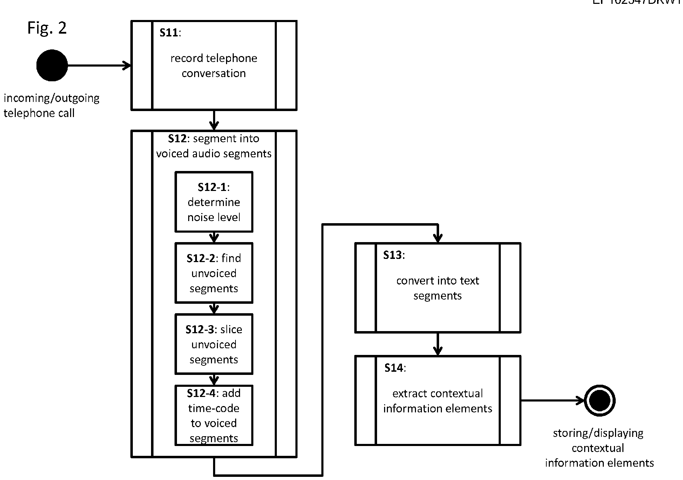

Referring now to Fig. 2 in which a more detailed view of a second embodiment of the telephone conversation analysis mechanism for contextual information element extraction is illustrated. Particular focus is laid on the segmentation operation into voiced audio segments, whereas the recording, converting and extracting operation are same as in the first embodiment. For conciseness reasons a repeated description has been omitted.

In the segmentation operation (see S12) the recording of the telephone conversation is segmented into a sequence of voiced audio segments. For this purpose, the operation accesses the one or more recorded audio files, in form of a batch processing queue, such that for each recorded audio file the segmentation operation is performed.

In more detail, operation starts with determining (see S12-1) a noise threshold level (short: noise level). As discussed before, this noise threshold level can be determined as a single threshold level for all of the one or more recorded audio files, or as plural threshold levels, e.g. one for each of the one or more recorded audio files, or e.g. one for loud and another for silent parts of the recorded audio file(s).

In an exemplary implementation, an average noise threshold level could be 30dB which allows a reasonable separation of voiced audio segments from un-voiced segments while being suitable for most commonly experienced forms of surrounding noise. It goes without saying that for a telephone conversation on a busy street the noise threshold level is different than for a telephone conversation in a quiet surrounding.

Then, the operation proceeds with finding (see S12-2) un-voiced segments (i.e. silent parts) in the recorded audio file(s). For each individual or group of samples in the recorded audio file(s) it is determined whether or not the (single or averaged) amplitude of the samples stays below the noise threshold level.

In detail it is advantageous to identify unvoiced segments with a sliding window. Averaging amplitudes of samples in the sliding window and determining for this average whether or not it stays below the noise threshold level enables superior results in finding un-voiced segments. Particularly, this way a segmentation into too short un-voiced segments can be inhibited, as it is undesirable to also find the pause between two spoken words as un-voiced segments.

Thereafter, the operation proceeds with slicing (see S12-3) un-voiced segments from the one or more recorded audio file(s). Thereby, the one or more recorded audio files(s) are divided into a plurality of audio files each comprising a voiced audio segment. Reference to an audio file is made for illustration purposes only. The voiced audio segments may alternatively be saved in a different format in the volatile memory or in a buffer for data transmission.

Finally, the operation is adding (see S12-4) a time-code to each of the voiced audio segments is performed. Each time-code is derived from the telephone conversation recording. For example, each voiced audio segment can have as time-code an absolute time or relative time of the segment in the total recording

In principle it would be equally possible to segment the audio file(s) in voiced audio segments by finding the voiced (and not the un-voiced) segments. Even though a determination into voiced or un-voiced segments appears to be mutually exclusive, it is far more superior to find the transition to and from un-voiced segments with a sliding window.

Particular, the adaptation of the duration of the sliding window even allows excluding shorter gaps (e.g. a pause between two spoken words) from being found as un-voiced segment. Thus, with this approach it can be ensured that only those parts of the recorded audio file are found as un-voiced audio segments which with a reasonable degree of certainty do not carry any information.

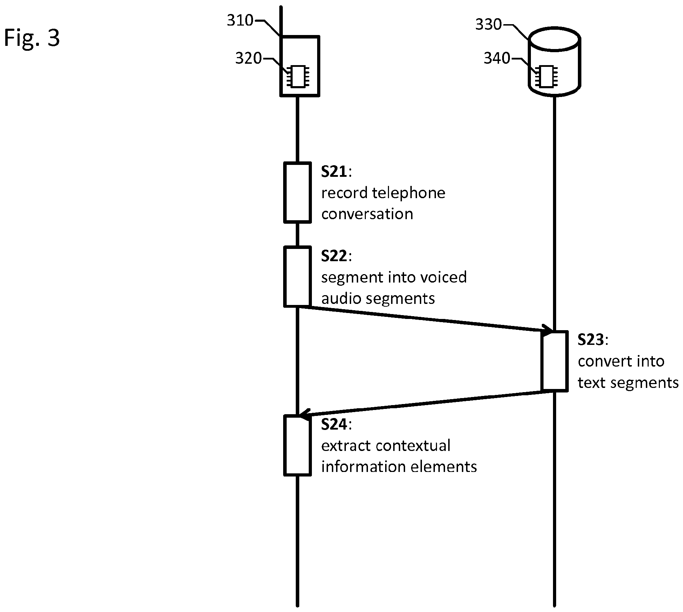

Referring now to Fig. 3 which depicts a non-limiting deployment scenario of the exemplary telephone conversation analysis mechanism for contextual information element extraction of the first embodiment. Accordingly, the recording, segmenting, converting and extracting operation are same as in the first embodiment. For conciseness reasons a repeated description has been omitted.

According to this deployment scenario, this mechanism is to be performed by a communication terminal 310, and a remote server 330 connected to the communication terminal over a communication network.

The communication terminal 310 such as a mobile handset, preferably a mobile telephone, comprise circuitry 320 (e.g. a processor and a transceiver) which in operation first record (S21) the telephone conversation, then segment (S22) it into a sequence of voiced audio segments, each having a time-code. Thereafter, the circuitry 320 proceeds with transmitting the sequence of voiced audio segments to the remote server 330.

The remote server 330 comprises circuitry 340 (e.g. a processor and a transceiver) which in operation receive the transmitted sequence of voiced audio segments and converts (S23) it into a sequence of text segments, each corresponding to one of the sequence of voiced audio segments and having the same time-code. Then, the remote server 330 transmits the sequence of converted text segments to the communication terminal 310.

Finally, the communication terminal 310, comprises the circuitry 320, which in operation receives from the remote server 330 the sequence of converted text segments, each corresponding to one of the sequence of voiced audio segments and having the same time-code; and extracts (S24) from the sequence of converted text segments contextual information elements considering the complete sequence of converted text segments.

Also here, the contextual information elements are ranked depending on the time-code of the text segment in the sequence of converted text segments from which it is extracted.

This deployment scenario is considered advantageous based on a valuation of restrictions regarding processing capabilities in the communication terminal. Should, for example, the communication terminal feature a processor with limited amounts of processing capabilities, then it is advantageous to at least deploy some of the operation (here the converting operation S23) to the connected remote server.

Particularly, in this deployment scenario it is not necessary to revert to a less advanced speech-to-text library for the conversion into text segments, while having the limited processing capability of a communication terminal in mind. Thus, this scenario benefits from a superior conversion quality.

Additionally, since only the sequence of voiced audio segments (not the un-voiced segments) is communicated between the communication terminal 310 and the remote server 330, then the total amount of transferred data is also reduced. Thus, this scenario also benefits from a restraining use of communication resources.

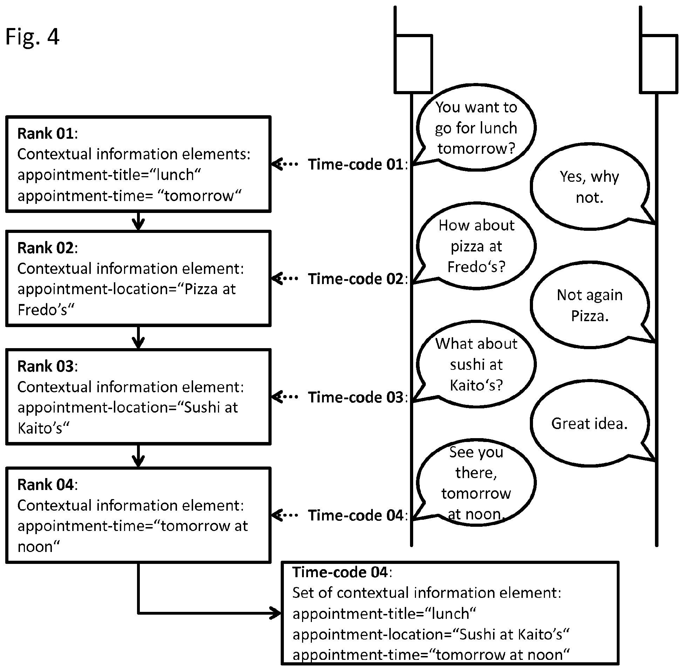

Referring now to Fig. 4, a schematic operation of the exemplary telephone conversation analysis mechanism for contextual information element extraction according to the first embodiment is shown. For demonstrating the operation of the mechanism, an exemplary telephone conversation is given in form of speech bubbles between two users.

Due to privacy concerns, this schematic operation assumes that the recoding is only performed of the uplink channel of the telephone conversation. In this respect, only the speech bubbles of the user on the left side of the figures are recorded, whereas the responses of the user on the right side are not part of the recording. Instead thereof, the recording comprises un-voiced (silent) segments.

At a first time-code 01, the user asks "You want to go for lunch tomorrow?"

After segmentation, conversion and extracting operation, two contextual information elements are extracted from this question. First, a contextual information element corresponding to the category appointment-title is extracted with the value "lunch". Second, a contextual information element corresponding to the category appointment-time is extracted with the value "tomorrow". These two contextual information elements are ranked depending on the time-code, here as rank 01.

At a second time-code 02, the user suggests "How about pizza at Fredo's?"

After segmentation, conversion and extracting operation, one contextual information element is extracted from this suggestion. A contextual information element corresponding to the category appointment-location is extracted with the value "Pizza at Fredo's". This contextual information element is ranked depending on the time-code, here as rank 02.

At a third time-code 03, the user continues "How about sushi at Kaito's?"

After segmentation, conversion and extracting operation, one contextual information element is extracted from this statement. A contextual information element corresponding to the category appointment-location is extracted with the value "Sushi at Kaito's". This contextual information element is ranked depending on the time-code, here as rank 03.

At a fourth time-code 04, the user concludes "See you there, tomorrow at noon."

After segmentation, conversion and extracting operation, one contextual information element is extracted from this statement. A contextual information element corresponding to the category appointment-time is extracted with the value "tomorrow at noon". This contextual information element is ranked depending on the time-code, here as rank 04.

As already apparent from this example, there exist repetitions regarding the contextual information elements of category appointment-time, and redundancies regarding the contextual information element of category appointment location. As discussed before, this is common for telephone conversations and distinguishes same over a voice input to a voice controlled personal assistant.

Having now established ranks for the individual contextual information elements, it is possible to group only those elements into a set on which a conclusion has been reached between the different users. This allows removal of repetitions and redundancies in a simple and elegant fashion.

More particularly, when grouping contextual information elements depending on their rank into sets, such that each set comprises only highest ranked contextual information elements pertaining to different categories. With this, the following set of contextual information elements would be grouped: appointment-title; "lunch", appointment-location: "Sushi at Kaito's", and appointment-time: "tomorrow at noon".

To tell this grouped set of contextual elements apart from other sets, it can be associated with the time-code of the text segment from which the last contextual information element of the set is extracted (here: time-code 04).

## Claims

1. A method for analyzing telephone conversations to be performed in a communication terminal and/or a remote server connected to the communication terminal, comprising the steps of:
• recording a telephone conversation;
• segmenting the telephone conversion recording into a sequence of voiced audio segments, each voiced audio segment having a time-code derived from the telephone conversation recording;
• converting each of the sequence of voiced audio segments into a respective text segment associated with the time-code; and
• extracting from the sequence of converted text segments contextual information elements considering the complete sequence of converted text segments;
wherein the contextual information elements are ranked depending on the time-code of the text segment in the sequence of converted text segments from which it is extracted.

2. The method according to claim1, wherein the recording step comprises:
• recording only the uplink channel of the telephone conversion.

3. The method according to claim1 or 2, wherein the segmenting step further comprises:
• removing un-voiced audio segments from the telephone conversation recording depending on an pre-determined noise threshold level.

4. The method according to any of claims 1 to 3, wherein the converting step includes:
• using a speech-to-text library, preferably on the remote server, with a pre-determined noise threshold level.

5. The method according to any of claims 1 to 4, wherein the extracting step includes:
• extracting contextual information elements of different categories, preferably comprising at least one of: appointment-title, appointment-time, appointment-duration, appointment-location, and appointment-participants.

6. The method according to any of claims 1 to 5, wherein the extracting step includes:
• ranking plural contextual information elements of a same category differently,
and/or
• ranking plural contextual information elements of a same category in an ascending order with the time-code of the respective text segments.

7. The method according to any of claims 1 to 6, wherein the extracting step comprises:
• grouping contextual information elements depending on their rank into sets, such that each set comprises only highest ranked contextual information elements pertaining to different categories.

8. The method according to any of claims 1 to 7, wherein the extracting step comprises:
• associating with each set the time-code of the text segment from which the last contextual information element of the set is extracted.

9. The method according to any of claims1 to 8, Wherein the method further comprises:
• displaying the extracted contextual information elements, preferably grouped in each set, on a display of the communication terminal,
and/or
• storing the extracted contextual information elements, preferably grouped in each set, in a memory of the communication terminal.

10. A communication terminal for analyzing telephone conversations connected to remote server, comprising circuitry which, in operation,
• records a telephone conversation;
• segments the telephone conversion recording into a sequence of voiced audio segments, each voiced audio segment having a time-code derived from the telephone conversation recording;
• transmits to the remote server the sequence of voiced audio segments;
• receives from the remote server a sequence of converted text segments, each corresponding to one of the sequence of voiced audio segments and being associated with the time-code; and
• extracts from the sequence of converted text segments contextual information elements considering the complete sequence of converted text segments;
wherein the contextual information elements are ranked depending on the time-code of the text segment in the sequence of converted text segments from which it is extracted.
